# EUROPEAN PATENT APPLICATION

(11) **EP 2 340 750 A1**
(43) Date of publication of application: **06.07.2011**
(21) Application number: 10150013.0
(22) Date of filing: 04.01.2010
(51) Int. Cl.: A47J 31/46, F16L 37/14

(54) **Coupling arrangement for tubular sections in particular in a beverage preparation machine**

(71) Applicant: Nestec S.A., 1800 Vevey (CH)
(72) Inventor: Möri, Peter, 3272, WALPERSWIL (CH)
(74) Representative: Schnyder, Frank Simon

(57) **Abstract**

A coupling arrangement (1) , in particular for a beverage preparation machine, comprises: a female end-portion (2) of a first tubular section (21), the end-portion having a transverse opening (22); a male end-portion (3) of a second tubular section (31), the male end-portion being insertable into the female end-portion and having a retaining surface (32); and a coupling element (4) insertable via the transverse opening into the female end-portion, the coupling element comprising a retaining portion (41), in particular a resilient retaining portion, for engaging with the retaining surface (32) of the male end-portion and mechanically securing the male end-portion in the female end-portion. The coupling element and female end-portion further comprise a fastening arrangement (2',2" ,42,43) for assembling and mechanically securing the coupling element (4) to the female end-portion (2) prior to insertion of the male end-portion (3) into the female end-portion (2).

## Description

### Field of the Invention

The field of the invention pertains to the coupling of tubular sections, in particular tubular sections for conveying fluids, for example in beverage preparation machine.

For the purpose of the present description, a "beverage" is meant to include any liquid food, such as tea, coffee, hot or cold chocolate, milk, soup, baby food, etc...

### Background Art

Certain beverage preparation machines use capsules containing ingredients to be extracted or to be dissolved; for other machines, the ingredients are stored and dosed automatically in the machine or else are added at the time of preparation of the drink.

Various beverage machines, such as coffee machines, are arranged to circulate liquid, usually water, from a water source that is cold or heated by heating means, to a mixing or infusion chamber where the beverage is actually prepared by exposing the circulating liquid to a bulk or pre-packaged ingredient, for instance within a capsule. From this chamber, the prepared beverage is usually guided to a beverage dispensing area, for instance to a beverage outlet located above a cup or mug support area comprised or associated with the beverage machine. During or after the preparation process, used ingredients and/or their packaging is evacuated to a collection receptacle.

Most coffee machines possess filling means that include a pump for liquid, usually water, which pumps the liquid from a source of water that is cold or indeed heated through heating means, such as a heating resistor, a thermoblock or the like. For instance, US 5,943,472 discloses a water circulation system for such a machine between a water reservoir and a hot water or vapour distribution chamber, for an espresso machine. Various types of pumps for pressurising and driving liquid within the device, for instance as disclosed in US 2,715,868, US 5,392,694, US 5,992,298 and US 6,554,588.

The circulation system includes valves, a metallic heating tube and a pump that are interconnected with each other and with the reservoir via a plurality of silicone hoses that are joined together by clamping collars. 2009/043865, WO 2009/074550, WO 2009/130099 and PCT/EP09/058562 disclose further filling means and related details of beverage preparation machines.

US 5,943,472 discloses a water circulation system between a water reservoir and a hot water or vapour distribution chamber of an espresso machine. The circulation system includes a valve, a metallic heating tube and a pump that are connected to the reservoir via different silicone hoses, which are joined using clamping collars.

Connectors for assembling successive sections of the fluid line in a beverage preparation machine are known. For instance, EP 1 920 685 and EP 1 920 686 disclose a fluid line connector for assembling a first line to a second line. The connector has a generally U-shaped removable locking element and O-ring seals and a pair of connection collars that are welded and/or squeezed onto the lines.

### Summary of the Invention

A preferred object of the invention is to provide a coupling arrangement for tubular conduits which is simpler to handle in the assembly process of the fluid line.

The invention thus relates to an improved coupling arrangement, in particular for a beverage preparation machine. The coupling arrangement comprises: a female end-portion of a first tubular section, the end-portion having a transverse opening, in particular a generally annular opening; a male end-portion of a second tubular section, the male end-portion being insertable into the female end-portion and having a retaining surface; and a coupling element insertable via the transverse opening into the female end-portion, the coupling element comprising a retaining portion for engaging with the retaining surface of the male end-portion and mechanically securing the male end-portion in the female end-portion.

In accordance with the invention, the coupling element and female end-portion further comprise a fastening arrangement for assembling and mechanically securing the coupling element to the female end-portion prior to insertion of the male end-portion into the female end-portion

Hence, the coupling element may be pre-assembled to the female end-portion before coupling the two tubular sections. It follows that a device or system including a tubular arrangement, in particular a fluid line, having two such tubular sections can be assembled in a simpler manner. In particular a section of the fluid line may be preassembled with the coupling element so that the actual coupling process in the device or system does not require any separate holding and positioning of the coupling element, the coupling element being already held in place in the female end-portion of the tubular section. This simplifies the assembly process and allows automation of the assembly.

The coupling element and the female end-portion are in particular disassemblable upon assembly. The coupling element can be resiliently fastened to the female end-portion, in particular with a snap. The coupling element may be fastened to the female end-portion by force-fitting. Other fastening arrangements can of course be implemented to pre-assemble the coupling element with the female end-portion.

Typically, the coupling element includes a fastening portion for fastening the coupling element to the female end-portion. In particular, the fastening portion of the coupling element is resiliently fastened to the female end-portion and may optionally form a snap. The fastening portion can be integral with the retaining portion of the coupling element.

Upon insertion of the coupling element into the female end-portion, the retaining portion of the coupling element usually extends inside the female end-portion and the fastening portion of the coupling element may extend outside the female end-portion. Optionally, the fastening portion forms a return portion extending on the female end-portion. This portion may in particular extend generally transversally around the female end-portion. The female end-portion can have a retaining surface, the fastening portion of the coupling element having a shape matching such retaining surface. In particular, this retaining surface of the female end-portion may be formed by: a recess such as a groove; and/or a protrusion such as a ridge

In one embodiment, the coupling element has a pair of fastening portions and the retaining portion thereinbetween. Alternatively, the coupling element may have a retaining portion connected to a single fastening portion, i.e. secured to the female end-portion by one fastening portion only.

The retaining portion of the coupling element may be generally U-shaped, the coupling element being in particular generally N-shaped or W-shaped. The return portions of the generally N-shaped or W-shaped coupling elements, i.e. adjacent the generally U-shaped portion at the side of the N-shape or adjacent the inverted U-shaped portion in the middle of the W-shape, may form the fastening portions.

The retaining surface of the male end-portion can be formed by a recessed and/or protruding part, in particular by a transverse groove and/or transverse ridge, of the end-portion.

In an embodiment, the coupling element is movable between a locking position for securing the male end-portion in the female end-portion and an un-locking position for allowing removal of the male end-portion from the female end-portion upon assembly to the female end-portion. Optionally, the coupling element delimits a first passage for the male end-portion associated with the locking position and a second passage for the male end-portion associated with the un-locking position. For example, the first passage is smaller than the second passage.

To prevent leakage between the coupled tubular sections, the coupling arrangement may also include a sealing member, such as an O-ring, extending inbetween the female end-portion and the male end-portion.

The first and second tubular sections are rigid. This is particularly advantageous to facilitate automatic handling of the tubular sections and of the coupling arrangement. Indeed, loose and flexible parts are more difficult to handle and position in an automatic assembly process.

The invention also relates to a beverage preparation machine that comprises a fluid line, such as a water circulation circuit, with a coupling arrangement as described above.

For instance, the machine is a coffee, tea or soup machine, in particular a machine for preparing within an extraction unit a beverage by passing hot or cold water or another liquid through a capsule or pod containing an ingredient of the beverage to be prepared, such as ground coffee or tea or chocolate or cacao or milk powder. The machine may comprise a brewing unit for housing this ingredient. Typically, the machine includes one or more of a pump, heater, drip tray, ingredient collector, liquid tank and fluid connection system for providing a fluid connection between the liquid tank and the brewing unit, etc... The configuration of a fluid circuit between the liquid reservoir and a heater for such a machine is for example disclosed in greater details in WO 2009/074550. Such coupling arrangement may for instance connect a pump, a heater and/or a brewing unit to the fluid circuit. The coupling arrangement of the invention is in particular suitable for high pressure fluid lines, such as lines guiding a fluid at a pressure above 2 bar, in particular in the range of 5 to 30 bar, such as 10 to 20 bar.

Other beverage machines that can be adapted to incorporate the above described couple arrangement are for instance disclosed in WO 2009/074553.

### Brief Description of the Drawings

The invention will now be described with reference to the schematic drawings, wherein:
Figure 1a is a perspective view of a coupling arrangement according to the invention prior to coupling;
Figure 1b is a perspective view of the coupling arrangement of Fig. 1a after coupling;
Figure 2a shows in cross-section the coupling arrangement of Figs 1a and 1b upon coupling;
Figure 2b shows in cross-section the coupling arrangement of Fig. 2a at disassembly;
Figure 3 shows an internal structure of a beverage preparation machine with coupling arrangements according to the invention; and
Figure 4 illustrates in cross-section a prior art comparative coupling arrangement.

### Detailed description

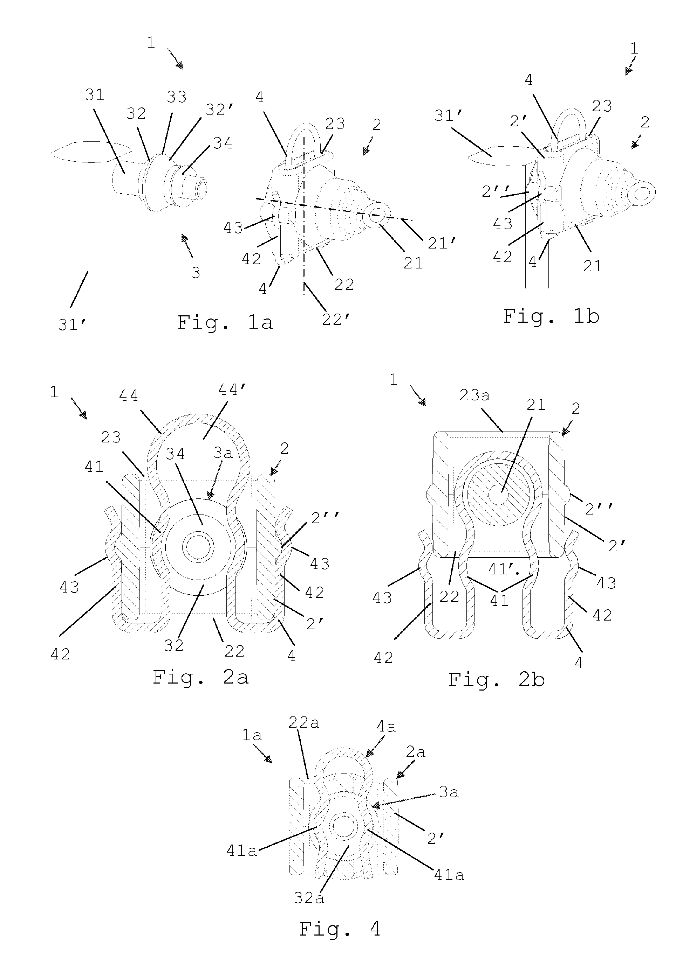

Figures 1a to 2b show a particular embodiment of a coupling arrangement 1 typically for a beverage preparation machine, such as a coffee machine. Coupling arrangement 1 may be mounted in the fluid circuit of the beverage preparation machine as for example described in greater details in WO 2009/130099.

Coupling arrangement 1 has an open female end-portion 2 of a first tubular section 21, in particular a rigid tubular section, the end-portion having a generally transverse opening 22 that has a direction 22' which is generally perpendicular to the direction 21' of the tubular section 21 at coupling arrangement 1.

Furthermore, coupling arrangement 1 has an open male end-portion 3 of a second tubular section 31, in particular a rigid tubular section. Male end-portion 3 is insertable into female end-portion 2 and has a retaining surface 32.

A coupling element 4 is insertable via transverse opening 22 into female end-portion 2. Coupling element 4 has a retaining portion 41 for engaging with retaining surface 32 of the male end-portion 3 and mechanically securing male end-portion 3 in female end-portion 2. Retaining surface 32 of male end-portion 3 is formed by a protruding part, in particular by a transverse or annular ridge 33.

In accordance with the invention, coupling element 4 and female end-portion 2 comprise a fastening arrangement 2',2" ,42,43 for assembling and mechanically securing the coupling element 4 to the female end-portion 2 prior to insertion of the male end-portion 3 into the female end-portion 2. In particular, coupling element 4 further includes a fastening portion 42 for assembling and mechanically securing coupling element 4 to female end-portion 2 prior to insertion of male end-portion 3 into female end-portion 2.

Retaining portion 41 of coupling element 4 is integral with fastening portion 42. For instance, coupling element 4 is formed of a wire, in particular a spring wire. Alternatively, element 4 may be formed of a bent blade, such as a spring blade.

Upon insertion of coupling element 4 into female end-portion 2, as illustrated in Figs 1a to 2b, retaining portion 41 of coupling element 4 extends inside female end-portion 4. Fastening portion 42 of coupling element 4 extends outside the female end-portion 2. Moreover, fastening portion 42 forms a return portion extending on outer surface 2' of female end-portion 4. In particular, return portion 42 extends generally transversally around the female end-portion 2.

Furthermore, female end-portion 2 has a retaining surface 2" formed by a ridge on outer surface 2'. Fastening portion 42 of coupling element 4 has a shape 43 matching such retaining surface 2" to secure coupling element 4 to female end-portion 2 prior to assembly of male end-portion 3, as illustrated in Fig. 1a. Fastening portion 42,43 of coupling element 4 is resiliently fastened to the female end-portion and forms a snap. For example, coupling element 4 is a spring element. In a variation, the fastening portion of the coupling element can be fastened by force-fitting or other fastening means.

In the embodiment illustrated in Figs 1a to 2b, coupling element 4 has a pair of fastening portions 42,43 extending on each side 2' of female end-portion 2. The retaining portions 41 are located inbetween fastening portions 42,43. The part of coupling element 4 with retaining portions 41 is generally U-shaped and generally forms together with fastening portions 42,43 a W shape.

In a variation, it is of course possible to provide only one fastening portion extending on only one side of female end-portion 2. In this case, the coupling element can be generally N-shaped (or inverted N-shaped).

Coupling element 4 is movable between a locking position, as illustrated in Figs 1a, 1b and 2a, for securing male end-portion 3 in female end-portion 2 and an un-locking position, as illustrated in Fig. 2b, for allowing removal of the male end-portion 3 from the female end-portion 2 upon assembly of coupling element 4 to female end-portion 2. In Fig. 2b coupling arrangement 1 is shown upon disassembly, without male end-portion 3.

Coupling element 4 delimits a first opening 41' inbetween retaining portions 41 for male end-portion 3 associated with the locking position, retaining portions 41 blocking movements of the retaining surface 32.

Retaining surface 32 may be perpendicular or at a steep slope to direction 21' of assembly and disassembly of male end-portion 3 and female end-portion 2 so as to prevent that retaining surface 32 forces its way through coupling element 4 by retaining portions 41. Conversely, male end-portion 3 has a spacing surface 32' that has a reduced slope, e.g. up to about 45 or 50 deg. to direction 21', for spacing retaining portions 41 at insertion of male end-portion 3 into female end-portion 2 by retaining portions 41. Coupling element 4 may thus be in its locking position, as illustrated in Figures 1a, 1b and 2a, already before insertion of male end-portion 3 into female end-portion 2. However, for withdrawing male end-portion 3, a tool may be used to spread retaining portions 41 to pass beyond retaining surface 32 or coupling element 4 may be moved into its un-locking position as explained hereafter.

By providing such a configuration, there is no problem of positioning of coupling element 4 in female end-portion 2 prior to assembly. Coupling element may be inserted into female end-portion 2 to the full extent allowed by return portions 42 against the outside of female end-portion 2, as shown in Fig. 2a. Hence, the configuration of return portions 42 provides a means to properly position coupling element 4 in its locking position in female end-portion 2 even before insertion of male end-portion 3.

Coupling element 4 has a disassembly portion 44 delimiting a second opening 44' for allowing the passage of male end-portion 3 in the un-locking position. Disassembly portion 44 is integral with and connects retaining portions 41. Retaining portions 41 and disassembly portion 44 are resilient for the passage by male end-portion 3 from the locking to the un-locking position and vice versa. Second opening 44' is sufficiently larger than opening 41' to let retaining surface 32 pass by disassembly portion 44.

In a variation, it is possible to provide a coupling element with a single opening for the male end-portion 3. For example, the part of the coupling element extending into the female-end portion and cooperating with the male end-portion is strictly U-shaped or horseshoe-shaped, e.g. the coupling element is generally W-shaped or Ω-shaped. In this case, a tool can be used to widen the opening formed by the coupling element to allow the removal of the male end-portion 3 from the female end-portion 2.

Hence, fastening portion 42 and female end-portion 2 are disassemblable upon assembly. Moreover, female end-portion 2 and male end-portion 3 are separable upon assembly.

Male end-portion 3 bears a sealing member 34, such as an O-ring, extending inbetween female end-portion 2 and male end-portion 3. Sealing member 34 is urged between male and female end-portions 2,3 to seal-off the fluid connection between the two portions 2,3.

Furthermore, female end-portion 2 has a second transverse opening 23, facing opening 22, for allowing the through passage of coupling element 4, in particular the through passage of disassembly portion 44. Hence coupling element 4 may rest on opposite sides of female end-portion 2 upon assembly with male end-portion 3 providing a greater stability to the assembly of coupling arrangement 1.

Coupling arrangement 1 can typically be integrated in the fluid line of a beverage preparation machine. For example, tubular section 31 is connected to an outlet 31' of a pump of a beverage preparation machine, as illustrated in Figs 1a and 1b, and tubular section 21 leads to the heater of the beverage preparation machine, e.g. a coffee machine.

The general architecture of such a beverage preparation machine is for example disclosed in WO 2009/130099, the content of which is hereby incorporated by reference.

Such a coupling arrangement may be used anywhere in the fluid line of such a beverage preparation machine, in particular, at the outlet of a water reservoir, at the inlet or outlet of a pump, at the inlet or outlet of a heater, and/or at the inlet of a brewing unit. In particular, such a coupling arrangement is particularly well adapted to connect tubular members that contain liquid under pressure, in particular downstream the pump.

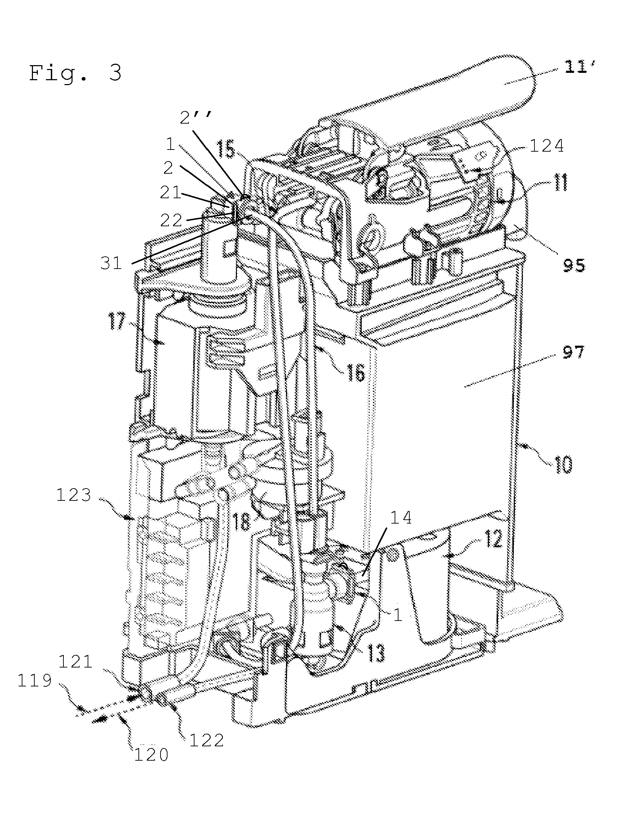

Figure 3, in which the same numeric references designate the same elements, illustrates an internal structure of a beverage preparation machine 10 according to the invention.

Machine 10 includes a brewing unit 11 that comprises an opening and closure handle 11' and means for holding a substance containing capsule, e.g., a coffee capsule, and liquid beverage delivery means such as a duct 95. A seat 97 is provided to receive a removable receptacle for collecting used capsules.

The holding means typically comprises a capsule holder and brewing cage, a fluid injection system for injecting water in the capsule and a closure device such as a lever and a knee joint mechanism. Suitable extraction modules are described in EP 1 859 713.

A water heater such as a thermo-block 12 or similar thermal block inertia-type heater is provided in beverage machine 10. The water heater is connected to brewing unit 11 via a priming valve 13 and tubular lines 14,15. Preferably, tubular lines 14,15 are rigid, e.g. metallic, to facilitate automatic assembly.

A pressure pump 17 is provided to supply water to water heater 12 at a high pressure. Therefore, pressure pump 17 is associated to water heater 12 by means of a tube 16. The pump can be a piston pump. A flow meter 18 is also provided upstream the pump to count the volume of water sucked by the pump and distributed to the water heater, and therefore to enable a precise beverage volume management. Water line 119 represents the cold water entering the water connection entry 121 and leading to flow meter 18. Water line 120 represents the cold water line exiting the water connection exit 122 coming from priming valve 13. Line 120 is to balance the pressure in the fluid circuit by purging air and/or water during the priming operation of the system. The valve is described in greater details in EP 1 798 457.

Beverage machine 10 comprises a first coupling arrangement 1 for the fluid connection of pump 17 and a second coupling arrangement 1 for coupling self-priming valve 13 to heater 12. For clarity, the coupling element is not shown in Fig. 3.

In contrast to the embodiment shown in Figs 1a and 1b, coupling arrangement 1 is connected to pump 17 via the female end-portion 21. Extremity of line 16 forms the male end-portion that is coupled to pump 17 via coupling arrangement 1.

Furthermore, an electronic circuitry 123 is also disposed in beverage machine 10 to control the different elements of the core unit, in particular, the water heater, the pump and the flow meter.

One or two button prints 124 are also placed on the side of the module which are electronically connected to electronic circuitry 123. These are known per se and typically soft pads enabling to open/close the electronic circuit for running the pump. Each print 124 may serve for a programmed volume of water to be pumped corresponding to a beverage size, e.g., a short espresso coffee of 40 mL or a long coffee cup of 110 mL.

Figure 4 shows, in cross-section, a prior art comparative coupling arrangement 1a, for example of the type disclosed in EP 1 538 384, for securing a male end-portion 3a in a female end-portion 2a by a coupling element 4a that extends into female end-portion 2a via an opening 22a. Coupling element 4a has retaining portions 41a that are engaged with a retaining surface 32a of male end-portion 3a to block the withdrawal of male end-portion 3a from female end-portion 2a.

As opposed to the above described coupling arrangements 1 of the invention, female end-portion 2a and generally U-shaped coupling element 4a have no fastening arrangement for assembling and mechanically securing coupling element 4a to female end-portion 2a prior to insertion of male end-portion 3a into female end-portion 2a. Coupling element 4a has in particular no return portion that cooperates with outer surface 2a' of female end-portion 2a or any other fastening arrangement.

Hence, coupling element 4a is assembled in the coupling arrangement 1a, in particular inserted into female end-portion 2a only once male end-portion 3a is in place in female end-portion 2a. It follows that at assembly, the three components, female end-portion 2a, male end-portion 3a and coupling element 4a must be positioned. Coupling element 4a and female end-portion 2a are not configured to be pre-assembled and secured together without the cooperating of male end-portion 3a. This complicates the assembly of connection arrangement 1a, in particular automation of the assembly of such a connection arrangement is difficult.

## Claims

1. A coupling arrangement (1), in particular for a beverage preparation machine, comprising:
- a female end-portion (2) of a first tubular section (21), the end-portion having a transverse opening (22);
- a male end-portion (3) of a second tubular section (31), the male end-portion being insertable into the female end-portion and having a retaining surface (32); and
- a coupling element (4) insertable via the transverse opening into the female end-portion, the coupling element comprising a retaining portion (41), in particular a resilient retaining portion, for engaging with the retaining surface (32) of the male end-portion and mechanically securing the male end-portion in the female end-portion,
**characterised in that** the coupling element and female end-portion further comprise a fastening arrangement (2',2" ,42,43) for assembling and mechanically securing the coupling element to the female end-portion prior to insertion of the male end-portion into the female end-portion.

2. The arrangement of claim 1, wherein the coupling element (4) and the female end-portion (2) are disassemblable upon assembly.

3. The arrangement of any preceding claim, wherein the coupling element (4) is resiliently fastened to the female end-portion (2), in particular with a snap.

4. The arrangement of any preceding claim, wherein the coupling element (4) is fastened to the female end-portion (2) by force-fitting.

5. The arrangement of any preceding claim, wherein the coupling element (4) includes a fastening portion (42,43) for fastening the coupling element to the female end-portion (2), the fastening portion of the coupling element being in particular resiliently fastened to the female end-portion and forming optionally a snap.

6. The arrangement of claim 5, wherein the fastening portion (42,43) is integral with the retaining portion (41) of the coupling element.

7. The arrangement of claim 5 or 6, wherein upon insertion of the coupling element (4) into the female end-portion (2), the retaining portion (41) of the coupling element extends inside the female end-portion and the fastening portion (42,43) of the coupling element extends outside the female end-portion, the fastening portion forming optionally a return portion (42) extending on the female end-portion in particular extending generally transversally around the female end-portion.

8. The arrangement of claim 7, wherein the female end-portion has a retaining surface (2" ), in particular formed by a recess such as a groove and/or by a protrusion such as a ridge, the fastening portion (42,43) of the coupling element having a shape (43) matching such retaining surface.

9. The arrangement of any one of claims 5 to 8, wherein the coupling element (4) has a pair of fastening portions (42,43) and the retaining portion (41) thereinbeteen.

10. The arrangement of any preceding claim, wherein the retaining portion (41) of the coupling element (4) is generally U-shaped, the coupling element being in particular generally N-shaped or W-shaped.

11. The arrangement of any preceding claim, wherein the retaining surface (32) of the male end-portion (3) is formed by a recessed and/or protruding part (33), in particular by a transverse groove and/or transverse ridge, of the end-portion.

12. The arrangement of any preceding claim, wherein the coupling element (4) is movable between a locking position for securing the male end-portion (3) in the female end-portion (2) and an un-locking position for allowing removal of the male end-portion from the female end-portion upon assembly to the female end-portion, the coupling element delimiting optionally a first passage (41') for the male end-portion associated with the locking position and a second passage (44') for the male end-portion associated with the un-locking position.

13. The arrangement of any preceding claim, further comprising a sealing member (34), such as an O-ring, extending inbetween the female end-portion and the male end-portion.

14. The arrangement of any preceding claim, wherein the first and second tubular sections (21,31) are rigid.

15. A beverage preparation machine (10) having a fluid line (11,12,13,14,15,16,17,18,119,120,121,122) comprising at least one coupling arrangement (1) as defined in any preceding claim.
